# EUROPEAN PATENT SPECIFICATION

(11) **EP 2 309 045 B1**
(45) Date of publication and mention of the grant of the patent: **18.06.2014**
(21) Application number: 10186476.7
(22) Date of filing: 05.10.2010
(51) Int. Cl.: D04H 1/74, D04H 13/00, B31F 1/28, B32B 3/28, D21H 27/40

(54) **Pleated fabric and textile formation comprising a layer of pleated fabric**
Wirkplissé und Textilformation mit einer Wirkplisséschicht
Étoffe plissée et formation textile comprenant une couche d'étoffe plissée

(30) Priority: 12.10.2009 CZ 20090672; 12.10.2009 CZ 200921801 U
(43) Date of publication of application: 13.04.2011
(73) Proprietor: Technicka Univerzita v Liberci, 461 17 Liberec (CZ)
(72) Inventor: Hanus, Jaroslav, 46002 Liberec (CZ); Sevcík, Ladislav, 46001 Liberec (CZ); Konecný, Martin, 84102 Bratislava (SK); Rydlo, Pavel, 46013 Liberec (CZ); Diblík, Martin, 46014 Liberec (CZ)
(74) Representative: Musil, Dobroslav

(56) References cited:
- EP-A2- 1 736 584
- WO-A1-00/05989
- WO-A1-94/27813
- DE-U1- 9 215 985
- FR-A- 1 409 526
- GB-A- 299 825
- US-A- 3 935 360
- US-A- 5 558 924
- US-A- 5 955 174

## Description

### Technical field

The invention relates to a multilayer pleated fabric.

The invention further relates to a textile formation comprising at least one layer of such multilayer pleated fabric.

### Background art

In cases when the required thickness and/or mechanical properties of product cannot be achieved by a plane fabric or textile composite, the pleated fabrics that reach such parameters are created by pleating down plane fabrics into folds (lamellas). At the same time there exist two basic types of pleating, namely the lateral (vertical) pleating, at which the individual folds of plane fabric are arranged side by side and surfaces of pleated fabric are formed of peaks of the folds, and the longitudinal (horizontal) pleating, at which the folds of the plane fabric are arranged on each other and surfaces of pleated fabric are formed of the side surface of the first and the last fold. The lateral pleating is more preferred for number of applications, as the same thickness of product could be achieved at lower consumption of material and the resultant pleated fabric thanks to arrangement of folds mostly preserves the typical textile properties.

According to considered application at the lateral pleating two basic types of folds are used. The fold in the form of V letter, whose width continuously increases along a whole height of the fold in direction from the fold's peak, is used first of all in filtration applications because without substantial increase of hydraulic gradient or weight it distinctly increases the filtration surface of filter, thus also absorptive capacity of filtered off impurities. The examples are the plane filtration insertion according to the CA 2034867 or cylindrical filtration lining according to the EP 2042221.

The fold in the form of U letter, whose width is constant along a whole height of the fold in direction from the fold's peak, thanks to relatively great density of the fabric is mostly used in applications for sound and/or heat insulation, to fill cavities in machinery or building industry, in production of furniture, etc. An example is the fabric produced by a well known Struto technology, the pleated fabric designated for automotive industry according to the US6534145, or upholstery padding according to the CA 2217314.

The pleated fabrics, whose folds are in the form of V or U letter nevertheless show a number of joint disadvantages, which prevent their utilisation for some applications, possibly they limit the application for a relatively short period with necessary frequent replacement. The most substantial of these disadvantages is mutual shifting of individual layers of multi layer plane fabric, possibly their undesired disconnecting in vertical direction, which results in loss of mechanical properties of the pleated fabric, deformation of its folds and its non-reversible devaluation. This simultaneously excludes usage of multi layer plane fabrics, whose at least one layer would be formed of material with lower consistency like e.g. from recycled textile materials, mashes, granules, etc. Usage of these materials is nevertheless desirable, as it would to plane fabric and consequently also to the pleated fabric render certain specific properties, e.g. suitable bending rigidity or increased acoustic absorption capacity, this at simultaneous preservation of textile appearance as well as touch. Disconnection of layers cannot sufficient reliably be prevented either by their binding before and/or after creation of folds, as the used binders during time upon exposure to UV radiation, increased temperature or other effects degrade and lose their binding properties. Moreover these binders in a negative manner influence the final parameters of the prepared pleated fabric, as they among others reduce its air permeability, increase its weight, etc.

The goal of the invention is to remove disadvantages of the background art through design of a new type of pleated fabric and textile composite, which comprises at least one layer of this pleated fabric.

### Principle of the invention

The goal of the invention has been achieved by a multilayer pleated fabric, whose principle consists in that, all of its layers are secured against undesired mutual shifting or disconnecting by a shape of the folds, which are alternately on opposite sides of the multilayer fabric closed by peaks of the folds. The folds continuously widen in direction from their peak on one side of the multilayer fabric into the broadest section of the fold, from which it continuously narrows into the narrowest section of the fold, in which the neighbouring folds ties together into its arms, while width of the fold in the narrowest section is zero a the fold is closed against its peak. This drop-type shape of fold upon pleating down the multilayer pleated fabric increases friction between its individual layers and, on the contrary of the shapes of folds from the background art, prevents their undesired shifting or disconnection. This simultaneously enables application of a larger spectrum of materials and their combinations.

To increase cohesion of multilayer pleated fabric and its strength in horizontal direction it is further advantageous, if its folds are mechanically fixed, namely e.g. by creating the quasi-yarns, adhesives, heat fixation and/or reinforcing netting or by combinations of these mechanisms.

The goal of the invention has also been achieved by textile formation which comprises at least one layer of multilayer pleated fabric according to the invention, on which at least one further layer of a suitable fabric is deposited.

To reinforce multilayer pleated fabric in horizontal fold, its folds are with advantage mechanically fixed, this either by means of quasi-yarn and/or adhesive and/or heat fixation and/or the reinforcing netting.

In one embodiment of the textile formation on the layer of multilayer pleated fabric there is positioned the second layer of multilayer pleated fabric comprising folds, which are alternately on opposite end closed by a peak of the fold, while width of the fold changes continuously along the fold's height, at the same time the fold in direction from its peak on one side of multilayer pleated fabric continuously broadens into the broadest section of the fold, from which it continuously narrows into the narrowest fold's section, in which the neighbouring folds ties together into arm of the fold and the width of the fold is zero and the fold is closed against its peak.

Also the folds of second layer of multilayer pleated fabric, for the purpose to increase the strength in horizontal direction, may be mechanically fixed by means of quasi-yarn and/or adhesive and/or heat fixation and/or the reinforcing netting or their combinations, etc.

The second layer of multilayer pleated fabric is towards the layer of multilayer pleated fabric with advantage turned in a plane of the second layer of multilayer pleated fabric by a suitable acute angle, through which the strength of textile formation or its other mechanical property may be increased in direction of presumed loading.

If there is requirement for identical or similar properties of the textile formation in longitudinal as well as lateral direction, the second layer of multilayer pleated fabric is towards the layer of multilayer pleated textile turned in plane of the second layer of multilayer pleated fabric by a right angle.

### Description of the drawing

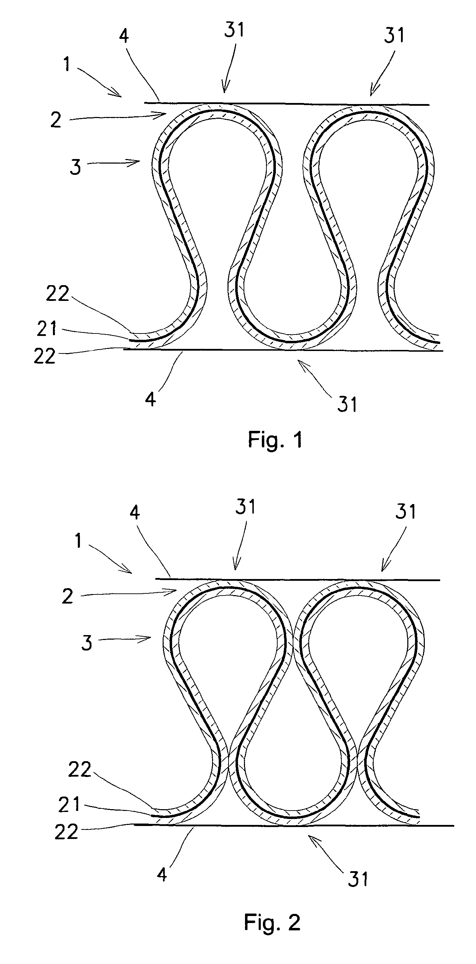

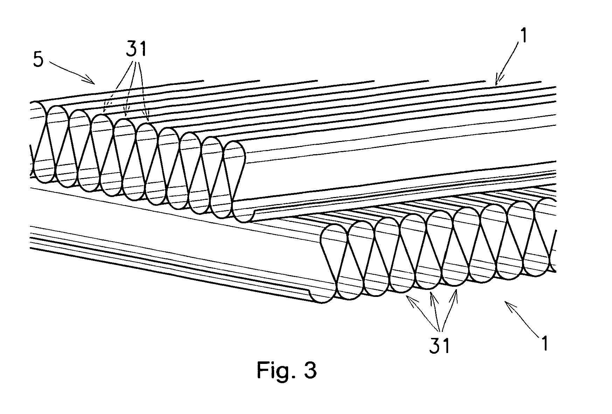

The enclosed drawing schematically represents two variants of multilayer pleated fabric and one variant of textile formation according to the invention, while the Fig. 1 represents a cross section through a multilayer pleated fabric, at which the folds in area of fold's foot are opened, the Fig. 2 a cross section through variant of multilayer pleated fabric, at which the folds in area of fold's foot are closed, and the Fig. 3 a variant of textile formation, which comprises two layers of multilayer pleated fabric according to the Fig. 2.

### Examples of embodiment

The Fig. 1 represents a cross section of one of possible variants of embodiments of the multilayer pleated fabric **1**. As indicated here, the multilayer pleated fabric **1** is created by pleating down the plane fabric **2,** which consists of three layers, while between two covering layers **22** of nonwoven fabric the layer **21** of paper is arranged. The multilayer pleated fabric **1** is formed of folds **3** of plane fabric **2,** which alternately on opposite end are closed by the peak **31** of the fold **3,** while each fold **3** in direction from the peak **31** of the fold **3** on one side of the multilayer pleated fabric **1** continuously broadens into the broadest section of the fold **3,** and from it continuously narrows into the narrowest section of the fold **3,** in which the neighbouring folds **3** ties together into its arms. The fold **3** is of a drop-type shape with side wall of approximate shape of the S letter. In the represented variant of embodiment the folds **3** are opened against the peak **31** of the fold **3.**

This shape of the fold **3** substantially increase the friction forces between individual layers **21** and **22** of the plane fabric **2,** by which these layers **21** and **22** are secured against undesired mutual shifting or disconnecting, this even without necessity of their previous and/or additional binding in vertical direction.

In horizontal direction the multilayer pleated fabric **1** in embodiment represented in the Fig. 1 on its surfaces is strengthened by so called quasi yarns **4,** this is by the stable linear formations similar to yarn, which are formed by twisting the portions of fibres protruding on external section of the peaks **31** of individual folds **3** or in their vicinity. The device known from the patent document CZ 281287 can advantageously be used for creation of the quasi-yarns **4.**

The multilayer pleated fabric **1** prepared in this way, against the pleated fabrics from background art, is advantageous in that, even without usage of adhesive, its layers **21** and **22** thanks to the shape of the folds **3** are mutually sufficiently fixed, so that at common manipulation or at full operational loading their disconnection or shifting cannot occur. Moreover, action of the shape of folds **3** does not change with time, either is not influenced by temperature or other parameters of environment in which the multilayer pleated fabric **1** is used, possibly stored. Production of the multilayer pleated fabric **1** according to the invention simultaneously brings, when compared with production of pleated fabrics according to the background art, a considerable savings in time and costs, as no binding material is used, so that the technological breaks for its sufficient drying need not to be kept, possibly to operate any device for speeding up its drying, etc. Applicability of the multilayer pleated fabric **1** according to the invention is neither influenced by properties of the binding material used.

Another advantage is that one of the layers **21, 22** of plane fabric **2,** advantageously that one positioned between the two covering layers **22,** may be performed from material with lower consistency, like e.g. from the recycled textile material, textile or non-textile fragments, granules, mash, dust, possibly the nanofibres or microfibres, their mixtures, etc., which at suitable choice enables creation of the multilayer pleated fabric **1** with properties, which are at the to date used pleated fabrics not at all achievable, or only at usage of large quantity of material. Next to this, at least one layer **21, 22** of plane fabric **2** may be created of material, whose binding with textile layers **22** by means of binders or other methods was complicated and not reliable to date, e. g. by metal or plastic foils, etc., which enables further adapting of properties of the multilayer pleated fabric **1** to the particular requirements. The covering layers **22** are at the same time with advantage formed of non-woven fabrics of various types, as these are the most suitable for creation of quasi-yarns **4,** possibly of other suitable textile materials.

In embodiment in the Fig. 1 the multilayer pleated fabric **1** is fixed on its surfaces in horizontal direction by means of quasi-yarns **4,** but in other not represented examples of embodiments it is in the horizontal direction fixed in other suitable manners, e.g. by heat fixation performed on its entire surface or only in selected sections, etc. For the multilayer pleated fabrics **1** loaded in vertical or mostly vertical direction it is further advantageous, if cohesion of layers **21** and **22** of the plane fabric **2** is increased in vertical direction through their heat fixation, lamination, etc. performed before and/or during and/or after creating of folds **3.** For fixation of the multilayer pleated fabric **1** in vertical and horizontal direction there may be further used a suitable binding material, nevertheless to achieve the desired result, an expressly smaller quantity is sufficient than at pleated fabrics according to the background art.

The Fig. 2 represents a cross section of further variant of embodiment of the multilayer pleated fabric **1** according to the invention, created by pleating down the same plane fabric **2** as in the previous example of embodiment. At this variant each fold **3** in direction from the peak **31** of the fold **3** continuously narrows up to a zero value, and the folds **3** are against the peak **31** of the fold **3** closed. This shape of folds **3** further increases the friction forces between the layers **21** and **22** of plane fabric **2** and increases their resistance against undesired disconnection or shifting. The multilayer pleated fabric **1** also in this variant of embodiment is fixed on its surfaces in horizontal direction by quasi-yarns **4**, possibly in other not represented examples of embodiment by means of other suitable manners, e.g. by heat fixation performed on its entire surface or only in selected areas, etc. If there is an assumption of loading in vertical or previously vertical direction, it is further advantageous, if cohesion of layers **21** and **22** of plane fabric **2** in vertical direction is increased by heat fixation, lamination of layers, etc. performed before and/or during and/or after creating of the folds **3.** For fixation of the multilayer pleated fabric **1** in vertical and horizontal direction there may be also used a suitable binding material, nevertheless to achieve the desired result, an expressly smaller quantity is sufficient than at pleated fabrics according to the background art.

At both described variants of multilayer pleated fabric **1** in the not represented example of embodiment may be achieved the required strength in horizontal direction by positioning the reinforcing netting on one or on both of its surfaces. The reinforcing netting is at the same time formed of independent layer of suitable material, for example of thin knitting or other fibrous netting, etc., which is tightly connected with surface of the multilayer pleated fabric **1,** namely according to the type and material of reinforcing netting either by means of binding material and/or heat fixation and/or quasi-yarns created on free ends of fibres of material of the multilayer pleated fabric **1**, which overlap over the reinforcing netting. Besides reinforcing the multilayer pleated fabric **1,** the reinforcing netting/more netting may be used also for increasing resistance of the multilayer pleated fabric **1** against abrasive wear, etc. In further not illustrated examples of embodiment the reinforcing netting may be combined with any from the above mentioned methods for strengthening the multilayer pleated fabric **1** in vertical as well horizontal direction.

A noted advantage of both variants of multilayer pleated fabric **1** according to the invention resulting from shape of their folds **3** is existence of lateral cavities equally distributed in structure of the multilayer pleated fabric **1**, which increase a total surface of multilayer pleated fabric **1** and simultaneously they relieve it, at the same time these cavities may further be used for inserting of not represented cores from suitable materials, possibly of not represented reinforcing elements, that further in a required manner enhance and/or modify some properties of these multilayer pleated fabrics **1,** e.g. compression resistance, and others. Next, these cavities may also be used for fastening the multilayer pleated fabric **1** in a required place, for positioning on to it designated structure, etc.

Due to the above mentioned reasons it is advantageous to create the multilayer pleated fabrics **1** with folds **3** according to any of the variants represented in the Fig. 1 and Fig. 2, also on the single-layer plane fabrics **2,** because through improvement of their properties and their further possible modification their applicability increases considerably.

The multilayer pleated fabrics **1** prepared by pleating down the single-layer as well as multi-layer plane fabrics **2** are after then applicable independently e.g. as anti-noise and/or heat insulation, filtration and/or sorption materials, light construction walls, ceiling soffits in building industry as well as in automotive industry, distant insertions, advertising or exhibition panels, filling of cavities, upholstery padding, etc., or in combination with further layers of textile as well as non-textile material as component parts of composites.

The Fig. 3 represents the textile formation **5**, which comprises two on each other positioned layers of multilayer pleated fabric **1** according to the invention represented in the Fig. 2, this is with folds **3** closed against the peak **31** of the fold **3**. Upper layer of the multilayer pleated fabric **1** is in its plane turned towards the bottom layer of the multilayer pleated fabric **1** by angle of 90°, which ensures that this textile formation **5** in the lateral as well as longitudinal direction has the same or at least comparable mechanical properties. As per the expected loading of the textile formation **5** in other not represented examples of embodiment the upper layer of the multilayer pleated fabric **1** may be turned by any other angle. In other not represented variants of textile formation **5** any layer of multilayer pleated fabric **1** may be added on any of its surface by further textile or non-textile layer, possibly by several layers, at the same time at least one of these layers may serve for fixation of multilayer pleated fabric **1**. In other not represented examples of embodiment the textile formation **5** may then comprise only one layer of multilayer pleated fabric **1** added by one or whatever required number of textile and/or non-textile layers.

As it is obvious for average skilled person in the branch, principle of the invention consisting in the shape of the fold **3** besides the multilayer pleated fabrics **1** is usable also for pleating down similar plane materials, e.g. paper, cardboard, etc. The used methods of fixation in vertical as well as horizontal direction after then correspond to the selected materials.

## Claims

1. A multilayer pleated fabric, **characterised in that** all of its layers (21) and (22) are secured against undesired mutual shifting or disconnecting by a shape of the folds (3), which are alternately on opposite sides of the multilayer fabric closed by peaks (31) of the folds (3), while the folds (3) continuously widen in direction from their peak (31) on one side of the multilayer fabric (1) into the broadest section of the fold (3), from which it continuously narrows into the narrowest section of the fold (3), in which the neighbouring folds (3) ties together into its arms, while width of the fold (3) in the narrowest section is zero, by which the fold (3) is closed against its peak (31).

2. The multilayer pleated fabric according to the claim 1, **characterised in that**, the folds (3) are mechanically fixed by means of quasi-yarns (4) and/or adhesive and/or heat fixation and/or reinforcing netting.

3. The multilayer pleated fabric according to any of previous claims, **characterized in that**, the layer (21) of plane fabric (2) positioned between the two covering layers (22) is performed from material with lower consistency, like e.g. from the recycled textile material, textile or non-textile fragments, granules, mash, dust, possibly the nanofibres or microfibres, their mixtures, etc.

4. The multilayer pleated fabric according to any of previous claims, **characterized in that**, at least one layer (21, 22) of the pleated textile (1) is created of metal or plastic foil.

5. A textile formation (5) comprising at least one multilayer pleated fabric (1) according to any of previous claims on which at least one further layer of textile is positioned.

6. The textile formation (5) according to the claim 5, **characterised in that**, the folds (3) of the multilayer pleated fabric (1) are mechanically fixed by means of quasi yarns (4) and/or adhesive and/or heat fixation and/or reinforcing netting.

7. The textile formation (5) according to any of the claims 5 to 6, **characterised in that**, on the multilayer pleated fabric (1) there is positioned second multilayer pleated fabric (1) according to any of claims 1 to 4.

8. The textile formation (5) according to the claim 7, **characterised in that**, the folds (3) of the second multilayer pleated fabric (1) are mechanically fixed by means of quasi-yarns (4) and/or adhesive and/or heat fixation and/or reinforcing netting.

9. The textile formation (5) according to the claims 7 or 8, **characterised in that**, the second multilayer pleated fabric (1) is turned towards the first multilayer pleated fabric (1) in plane of the second multilayer pleated fabric by an acute angle.

10. The textile formation (5) according to the claims 7 or 8, **characterised in that**, the second multilayer pleated fabric (1) is turned towards the first multilayer pleated fabric (1) turned in plane of the second multilayer pleated fabric (1) by right angle.

## Patentansprüche

1. Mehrlagige gefaltete Textilie, **dadurch gekennzeichnet, dass** alle von ihren Lagen (21) und (22) gegen unerwünschte gegenseitige Verschiebung oder Lostrennung durch die Form der Falten (3) sichergestellt sind, die auf den Gegenseiten der mehrlagigen Textilie mit den Spitzen (31) der Falten (3) abwechselnd abgeschlossen sind, wobei sich die Falten (3) in der Richtung von ihren Spitzen (31) auf einer Seite der mehrlagigen Textilie (1) in den breitesten Teil der Falte (3) kontinuierlich verbreiten, von dem sie sich in den engsten Teil der Falte (3) verjüngen, in dem an die Arme der Falte (3) die benachbarten Falten (3) anschließen, wobei die Breite der Falte (3) in dem engsten Teil Null gleich ist, wobei die Falte (3) gegen ihre Spitze (31) abgeschlossen ist.

2. Mehrlagige gefaltete Textilie nach dem Anspruch 1, **dadurch gekennzeichnet, dass** die Falten (3) mit Quasigarn (4) und/oder Klebstoff und/oder Wärmefixation und/oder Bewehrungsnetz mechanisch fixiert sind.

3. Mehrlagige gefaltete Textilie nach einem der vorangehenden Ansprüche, **dadurch gekennzeichnet, dass** die zwischen zwei Decklagen (22) angebrachte Lage (21) der Flachtextilie (2) aus dem Material mit einer niedrigeren Kohäsion, wie z.B. aus einem verwerteten Textilmaterial, Textil- oder Nichttextilabschnitten, Granülen, Schrot, Staub, eventuell Nanofasern, ihren Mischungen usw. gebildet ist.

4. Mehrlagige gefaltete Textilie nach einem der vorangehenden Ansprüche, **dadurch gekennzeichnet, dass** mindestens eine Lage (21, 22) der gefalteten Textilie (1) aus einer Metall- oder Kunststofffolie gebildet ist.

5. Textilgebilde (5), das mindestens eine Lage der gefalteten Textilie (1) nach einem der vorangehenden Ansprüche aufweist, auf der mindestens eine weitere Lage der Textilie angebracht ist.

6. Textilgebilde (5) nach dem Anspruch 5, **dadurch gekennzeichnet, dass** die Falten (3) der mehrlagigen gefalteten Textilie (1) durch Quasigarn (4) und/oder Klebstoff und/oder Wärmefixation und/oder Bewehrungsnetz mechanisch fixiert sind.

7. Textilgebilde (5) nach einem der Ansprüche 5 bis 6, **dadurch gekennzeichnet, dass** auf der mehrlagigen gefalteten Textilie (1) eine andere mehrlagige gefaltete Textilie (1) nach einem der Ansprüche 1 bis 4 gelagert ist.

8. Textilgebilde (5) nach dem Anspruch 7, **dadurch gekennzeichnet, dass** die Falten (3) der anderen mehrlagigen gefalteten Textilie (3) durch Quasigarn (4) und/oder Klebstoff und/oder Wärmefixation und/oder Bewehrungsnetz mechanisch fixiert sind.

9. Textilgebilde (5) nach den Ansprüchen 7 oder 8, **dadurch gekennzeichnet, dass** die andere mehrlagige gefaltete Textilie (1) der ersten mehrlagigen gefalteten Textilie (1) gegenüber in der Ebene der anderen mehrlagigen Textilie (1) um einen spitzen Winkel gedreht ist.

10. Textilgebilde (5) nach den Ansprüchen 7 oder 8, **dadurch gekennzeichnet, dass** die andere mehrlagige gefaltete Textilie (1) der ersten mehrlagigen gefalteten Textilie (1) gegenüber in der Ebene der anderen mehrlagigen gefalteten Textilie (1) um einen rechten Winkel gedreht ist.

## Revendications

1. Le tissu plié à plusieures couches, **caractérisé en ce que** toutes ses couches (21) et (22) sont assurées contre le décalage mutuel indésirable ou contre le détachement par la forme des plis (3) qui sont alternativement sur les parties opposées du tissu à plusieures couches fermées par des sommets (31) des plis (3), en temps que les plis (3) grossissent de façon continue dans la direction de leurs sommets (31) sur un côté du tissu à plusieures couches (1) à la partie la plus large du pli (3), de laquelle ils se resserrent de façon continue jusqu'à la partie la plus étroite du pli (3), dans laquelle les bras du pli (3) enchaînent les plis voisins (3), en temps que la largeur du pli (3) dans la partie la plus étroite est égale à zéro, de sorte que le pli (3) est fermé contre son sommet (31).

2. Le tissu plié à plusieures couches suivant la revendication 1, **caractérisé en ce que** les plis (3) sont fixés mécaniquement par les "quasi-filés" (4) et/ou par le moyen adhésif et/ou par la fixation thermique et/ou par le filet d'armature.

3. Le tissu plié à plusieures couches suivant quelconque des revendications sus-mentinnées, **caractérisé en ce que** la couche (21) du tissu de surface (2) placée entre deux couches de revêtement (22) est formée par le matériau avec une cohérence plus basse, par exemple par le matériau textile recyclé, par les souches textiles ou non textiles, par les pièces granulées, par le détritus, la poussière, éventuellement par les nanofibres ou microfibres, par leur mélange, etc.

4. Le tissu plié à plusieures couches suivant quelconque des revendications sus-mentinnées, **caractérisé en ce qu'**au moins une couche (21, 22) du tissu plié (1) est formée par une feuille mince en métal ou en plastique.

5. La formation textile (5) comprenant au moins une couche du tissu plié (1) suivant quelconque des revendications sus-mentinnées, sur laquelle est placée au moins une autre couche du tissu.

6. La formation textile (5) suivant la revendication 5, **caractérisé en ce que** les plis (3) du tissu plié à plusieures couches (1) sont fixés mécaniquement par le "quasi-filé" (4) et/ou par le moyen adhésif et/ou par la fixation thermique et/ou par le filet d'armature.

7. La formation textile (5) suivant quelconque des revendications de 5 à 6, **caractérisé en ce que** sur le tissu plié à plusieures couches (1) est placé un second tissu plié à plusieures couches (1) suivant quelconque des revendications de 1 à 4.

8. La formation textile (5) suivant la revendication 7, **caractérisé en ce que** les plis (3) du second tissu plié à plusieures couches (3) sont fixés mécaniquement par le "quasi-filé" (4) et/ou par le moyen adhésif et/ou par la fixation thermique et/ou par le filet d'armature.

9. La formation textile (5) suivant les revendications 7 ou 8, **caractérisé en ce que** le second tissu plié à plusieures couches (1) est pivoté par rapport au premier tissu plié à plusieures couches (1) au niveau du second tissu plié à plusieures couches (1) d'un angle aigu.

10. La formation textile (5) suivant les revendications 7 ou 8, **caractérisé en ce que** le second tissu plié à plusieures couches (1) est pivoté par rapport au premier tissu plié à plusieures couches (1) au niveau du second tissu plié à plusieures couches (1) d'un angle droit.
